Europäisches Patentamt

European Patent Office

Office européen des brevets

(11) Publication number: **0 512 695 A1**

# EUROPEAN PATENT APPLICATION

(21) Application number: **92303295.7**

(22) Date of filing: **13.04.92**

(51) Int. Cl.⁵: **A01K 13/00**, A47L 13/16, A47K 7/02

(30) Priority: **02.05.91 US 694555**

(43) Date of publication of application:
**11.11.92 Bulletin 92/46**

(84) Designated Contracting States:
**DE FR GB**

(71) Applicant: **MINNESOTA MINING AND MANUFACTURING COMPANY**
**3M Center, P.O. Box 33427**
**St. Paul, Minnesota 55133-3427(US)**

(72) Inventor: **Marabella, Charles P., c/o Minnesota Mining and**
**Manufact. Co., 2501 Hudson Road, P.O. Box 33427**

**St. Paul, Minnesota 55133-3427(US)**
**Inventor: Welygan, Dennis G., c/o Minnesota Mining and**
**Manufact. Co., 2501 Hudson Road, P.O. Box 33427**
**St. Paul, Minnesota 55133-3427(US)**
**Inventor: Kure, Jane T., c/o Minnesota Mining and**
**Manufact. Co., 2501 Hudson Road, P.O. Box 33427**
**St. Paul, Minnesota 55133-3427(US)**

(74) Representative: **Baillie, Iain Cameron et al**
**c/o Ladas & Parry, Altheimer Eck 2**
**W-8000 München 2(DE)**

(54) **Article for grooming animals.**

(57) Articles for grooming animals, and particularly short-haired animals. The article involves the use of materials that are three-dimensional, porous networks of polymeric material, such as certain materials commonly used as floor matting and erosion control and revegetation matting, together with means for retaining the material on or by the hand of the user.

FIG. 2

EP 0 512 695 A1

FIG. 1

TECHNICAL FIELD

The present invention relates to articles such as mitts, curry combs, brushes, sponges, rakes, and the like, that are useful in caring for and grooming animals, e.g., by scrubbing and washing the coats of animals. In particular the present invention relates to such articles useful for grooming animals having short hair, such as cattle and dairy cows, horses, and short-haired dogs. In another aspect the invention relates to three dimensional, organic polymeric materials.

BACKGROUND OF THE INVENTION

Most domestic animals, including short-haired animals such as cattle, dairy cows, horses, and short-haired dogs, require frequent care and grooming by their owners or trainers, e.g., by brushing, wiping, rinsing, conditioning, shampooing, treating with topical therapeutic agents such as antifungals, antibacterials, antiinflammatories, anti-itch agents, and the like. Such grooming is necessary in order to remove dust, fecal matter, loose hair, and other debris from on and under the coat.

A number of articles are conventionally used for grooming short-haired animals, such as brushes, sponges, and combs. Such articles suffer from a number of drawbacks however, including the fact that some are too bulky and/or too heavy to use for convenient prolonged use, particularly when wet and/or filled with debris from the animal's coat. Many others do not provide the desired combination of conformability, gentleness, and other characteristics to allow them to be used over the entire body of any animal.

Likewise many of such articles are too dense and/or water-absorbent to be easily cleaned, dried, and re-used within a short period of time. Of particular concern are those that simply do not clean thoroughly enough, e.g., by cleaning throughout the entire coat down to the skin of the animal. Often this inability to clean thoroughly is caused, at least in part, by the gradual accumulation of debris from the coat into or onto the article in the course of its use.

The purpose of an article such as a curry comb is to lift the dirt from underneath the hair coat and to stimulate and massage the skin of the horse. It also serves as a tool to remove dried on dirt and can aid in removing loose hair. Most curry combs on the market today are made of steel, stiff plastic, or firm rubber. While some degree of stiffness is necessary, it makes the device unsuitable for the delicate areas of the horse such as the face, ears and lower legs. These areas often are caked with mud and require stimulation for removal of loose hair.

There are products on the market which are made with a softer rubber, but often they are not very conformable to the horse's body or are difficult to grip or keep on the hand.

What is clearly needed is an article that provides the owner or trainer of an animal with the ability to quickly, easily, and completely clean the animal's coat.

SUMMARY OF THE INVENTION

The present invention provides an article useful for grooming animals, the article comprising (a) sheet material comprising a three-dimensional, porous network of water-resistant, organic polymeric material, and (b) means for retaining the sheet material on or by a human hand.

Sheet materials useful for the manufacture of articles of the present invention include materials available for other purposes, such as floor matting. For instance, the floor matting available commercially under the tradename Nomad™ (3M, St. Paul, MN) is particularly useful. Also useful are related materials sold for use in preventing soil erosion, such as the material available commercially and described as "Erosion Control and Revegetation Matting", as described more fully in the Examples below.

In view of the open, three-dimensional nature of the preferred sheet material, the article is able to quickly, easily, and thoroughly clean an animal's coat of encrusted dust, dirt, and fecal material. By virtue of such parameters as the surface porosity of the material, its void volume, and the thickness and rigidity of its strands, the material is able to simultaneously lift hairs of the coat in the course of scrubbing, thereby allowing water and shampoo to thoroughly penetrate the coat of hair down to the skin. The article can also be used to gently abrade the skin itself, thereby allowing the removal of dead skin cells, providing a more thorough cleaning of the hair and skin surface.

Also by virtue of the open nature of surface of the preferred sheet material of the article, and its loft, debris and loose hair are simultaneously able to be rinsed away through the article as it is used, thereby preventing accumulation of such debris.

The sheet material can be retained on or by a hand by any suitable means. The article is desirably flexible to enable it to both be comfortably retained on or by the hand, as well as to conform to the contours

EP 0 512 695 A1

of the animal's body in the course of grooming.

A preferred article is both water-resistant and porous in order to prevent the accumulation of water or shampoo. The article is thereby able to remain lightweight enough for prolonged use without fatigue on the part of the user, and can thereafter be quickly and easily rinsed, dried, and reused. By minimizing water retention, use of the article also lessens the chance that bacterial contamination or other vectors of dermal problems will be transferred from one animal to another.

The present invention also provides a method of grooming an animal by the use of an article as described herein.

BRIEF DESCRIPTION OF THE DRAWING

FIG. 1 is a front elevational view of a mitt according to the present invention, showing how it is applied over, and retained by, the hand for use.

FIG. 2 is a partial cross-section taken along line 2-2 of the mitt of FIG. 1, greatly enlarged to show detail.

FIG. 3 is a front elevational view of an alternative embodiment according to the present invention, in the shape of a curry comb, showing the scrub surface.

FIG. 4 is an elevational view of the same embodiment of FIG. 3, only showing a top view of the curry comb as applied over, and retained by, the hand for use.

FIG. 5 is a partial cross-section taken along line 5-5 of the embodiment of FIG. 4, greatly enlarged to show detail.

DETAILED DESCRIPTION

The present invention provides an article useful for grooming animals, the article comprising a sheet material comprising (a) a three-dimensional, porous network of water-resistant, organic polymeric material, together with (b) means for retaining the sheet material on or by a human hand.

The word "groom", and inflections thereof, as used herein refers to the act of rubbing the coat of an animal with an article of the present invention, e.g., in the course of brushing, wiping, rinsing, conditioning, and/or shampooing the coat, or in the course of treating the coat with topical therapeutic agents.

Sheet materials useful for the manufacture of articles of the present invention include three-dimensional, porous networks of water-resistant, polymeric strands. As used herein the following words and phrases have the following meanings:

"sheet material" shall refer to a substantially planar material having a first surface, that in use substantially faces and contacts an animal's coat, and an opposite second surface that in use faces, and optionally contacts, either the user's hand itself and/or means for retaining the sheet material on or by the user's hand;

"three-dimensional" shall refer to the fact that an article of the present invention has a sufficient depth, in addition to length and width, for its intended purpose;

"porous network" shall refer to a stable three-dimensional relationship between strands or within a foam that is sufficient to allow water and/or other materials such as dirt and hair to pass into and/or through the material for the intended purpose of the article, thereby providing a sufficient void volume within the material;

"water-resistant" shall refer to a sheet material that is sufficiently resistant to water in order to stably retain the three-dimensional integrity of both the material itself and the three-dimensional network in the course of their intended use; and

"polymeric material" shall refer to the individual strands or loops making up a sheet material, such strands or loops being of a substantially polymeric material, and/or to the material making up the cell walls of a reticulated foam;

Preferred materials for use in articles of the present invention include those that provide an optimal combination of such properties as density, weight, weave, durability, roughness or abrasiveness, flexibility, cleanability, cost, and the ability to be easily and reproducibly fabricated into varying shapes, sizes, and colors. Optionally, articles such as mitts can include a plurality of types of sheet materials, e.g., in order to provide surfaces with a variety of such properties.

Preferred sheet materials are substantially flexible. "Flexible" as used herein refers to a sheet material that is sufficiently pliable and supple to be conformed both to the area of the animal being groomed and, if need be, to the user's hand.

Suitable polymers for preparing flexible sheet materials include flexible polyvinylchlorides,

4

polyurethanes, polyesters, nylons, polyolefins, and copolymers thereof.

Examples of suitable materials include foams, and woven and nonwoven sheet materials that provide an optimal combination of such properties as loft, softness, porosity, and durability. Suitable foams include polyurethane foams having open, stable, three dimensional networks, and particularly reticulated foams, such as those commonly known in the art and commercially available for other purposes. Also useful are materials such as low density extruded mats, netting, or webs, air laid nonwoven materials, and thermoformed webs. Sheets of suitable materials can optionally be fastened or held together, e.g., to increase their thickness and/or add layers of air or other materials between them, by such means as sewing, stitchbonding, adhesive gluing, chemically fusing, heatsealing, ultrasonic sealing, and the like.

Particularly preferred are extruded materials prepared by processes involving melt spinning and water quenching, such as those described in U.S. Patent Nos. 3,691,004, 3,837,988, 4,293,604, 4,351,683, the disclosures of each of which being incorporated herein by reference. Preferred materials of these types have a filament diameter of between about 0.1 mm and about 3 mm, and preferably between about 0.2 mm and about 1 mm. Preferred materials also exhibit a void volume of about 70% or more, preferably about 80% or more, and most preferably about 90% or more.

The article of the present invention provides the material described herein together with means for retaining the material by the hand of the user. The word "retain", and inflections thereof, as used herein refers to the ability to keep the article in a desired position relative to the user's hand, as well as relative to the coat of an animal, in the course of grooming an animal.

The article can be retained in any suitable manner, e.g., it can be gripped, grasped or clutched by the hand in the manner of a sanding block. In another, and preferred embodiment it can be shaped in a suitable form, e.g., in the form of a mitt, which is slipped over the hand of the user. By appropriate selection of mitt dimensions and overall size the hand can be kept fully extended during grooming in order to achieve optimal surface area and porosity of the mitt. The mitt can be retained on the hand by providing regions, such as the wrist dimensions, that are sufficient to prevent the mitt from slipping off the hand in the course of its use.

Preferably retaining means are fastened directly or indirectly to the sheet material of the invention, or inherently provided by the shape of the sheet material itself. When attached to a sheet material, retaining means can be attached by such means as sewing, bonding, fusing, spot welding, gluing, mechanically fastening, and the like. Examples of such retaining means include straps, strings, tape, buckles, ties, and hook and loop fasteners such as those available under the tradename Velcro™.

Preferably retaining means are inherently provided by construction of the article itself, i.e., wherein the article is designed in such a manner that it can be applied to the hand and there remain in place throughout its use.

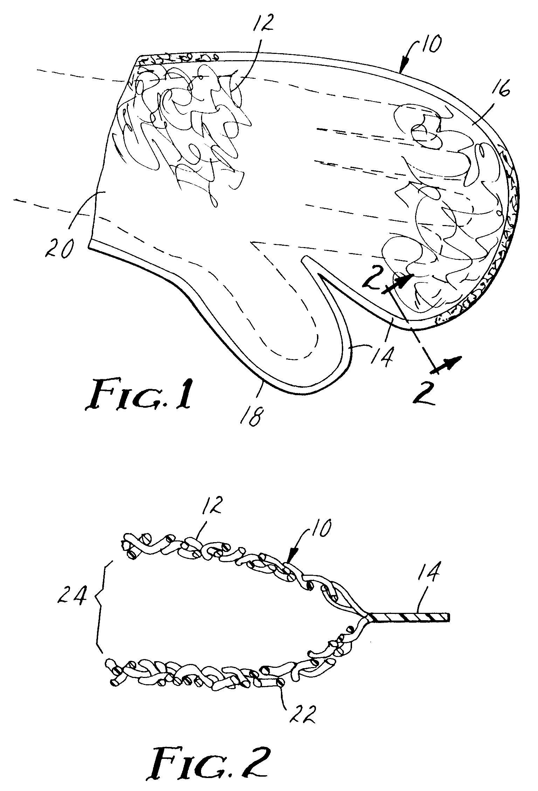

Examples of suitable retaining means and shapes for the article of the present invention, as well as other aspects of the invention, will be further described with reference to the Drawing. In FIGS. 1 and 2 there is depicted a preferred embodiment wherein the article is in the form of a mitt.

Mitt 10 as shown in FIG. 1 is prepared from two pieces of sheet material 12, by heat sealing edge 14 of the two superimposed pieces of sheet material. The resulting form has a fingerless paw portion 16, as well as a thumb portion 18. The mitt is easily retained on the hand during use by providing appropriate dimensions at the wrist portion 20 in order to prevent the mitt from easily slipping off. Given the inherent extensibility and resilience of the sheet material, wrist portion 20 can be sufficiently stretched in order to insert the user's hand, but the portion will thereafter tend towards its original dimensions in order to serve to retain the mitt on the hand.

The mitt can be provided in several sizes to suit users with hands of various sizes. The paw can also be divided into two to four fingers to provide increased retention, and variable conformability if so desired.

The edge of the mitt can be sealed by any suitable means such as sewing or otherwise stitching, fusing, including spot welding, gluing, mechanical fasteners and the like. As can be seen in FIG. 2, the upper 12 and lower 22 sheet materials have been fused by heat sealing at edge 14, creating a interior space 24 for insertion of the user's hand.

It is presently preferred to fuse the edges with heat, as by dielectric heating as described more fully below, and the edge seam is preferably about 1/16 inch to about 1/4 inch (about 0.16 cm to about 0.64 cm) wide. The mitt will generally be about 6 inches to about 12 inches (about 15 cm to about 30 cm) long, about 5 inches to about 10 inches (about 13 cm to about 25 cm) wide at its widest point, i.e., including the thumb portion, and about 3 inches to about 8 inches (about 8 cm to about 20 cm) wide at the wrist.

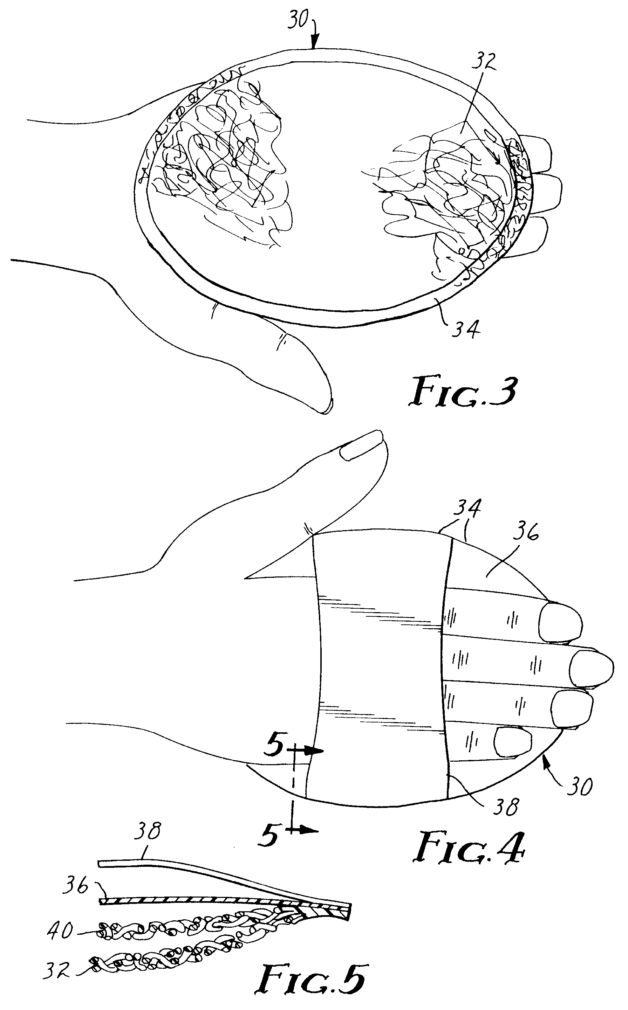

In an alternative embodiment, an article of the present invention is provided in the shape of a curry comb, as depicted in FIGS. 3, 4 and 5. In FIG. 3 is seen a curry comb 30 comprising the article in its retained position on the user's hand. A major surface of sheet material 32 is able to face the animal's coat in the course of scrubbing. In FIG. 4 is seen the reverse side of the user's hand, showing the heat sealed edge 34 of the comb, and backing material 36, to the opposite surface of which is attached the sheet material previously described. Strap 38 is shown, attached at edge 34 to the surface of backing 36 opposite the surface bearing the sheet material.

The user's hand is shown inserted between strap 38 and backing 36, in order to retain the article on the hand. In FIG. 5 strap 38, backing 36, and sheet materials 32 and 40 are shown in cross-section. Sheet material 32 as well as a second layer 40 of the same type of sheet material are depicted in order to provide added thickness. In this particular depiction there is shown an air layer between both pieces of sheet material and between the interior sheet material and the backing, although none of such air layers are required and these layers could optionally be adhered in intimate contact.

Articles of the present invention can be prepared from sheet materials described above by any suitable techniques within the skill of those in the art. For instance, two pieces of sheet material can be surface bonded at their edges into the shape of a mitt. Preferably, the two pieces would be heated to coalesce the fibers at the edges into a solid mass of thermoplastic material, such that the individual fibers were no longer or barely distinguishable in the bonded portion or region. Mitts, for instance, are preferably prepared as described more fully in the EXAMPLES below, by fusing together two appropriately shaped pieces of sheet material by means of conventional techniques, e.g., by welding or sealing as described in "Dielectric Heating", T.L. Wilson, pages 1-23, in Vol. 5, Encyclopedia of Polymer Science and Engineering, 2d ed., Wiley and Sons, NY, the disclosure of which is incorporated herein by reference.

The following EXAMPLES are provided to further illustrate the present invention, but the particular materials and processes recited therein, as well as other conditions and details, should not be construed to unduly limit this invention.

EXAMPLES

EXAMPLE 1

An article of the present invention was prepared in the shape of a mitt in the following manner. Two 30.5 cm x 30.5 cm sheets of a vinyl erosion control and revegetation matting ("ECRM"; Miramat™ 2400, Miramat Corp., Charlotte, NC, no backing present) was obtained having a thickness of about 0.6 cm.

A conventional radio frequency (RF) embosser press and a tear-seal die having a mitt shape were used to make the mitt from the sheets. The 6 Kw Thermatron embosser press was fitted with a 46 cm x 46 cm press plate and was run at 70% power and a pressure of 5.6 kg/cm$^2$, using a 10 sec heat cycle followed by a 15 sec cool cycle. A sheet of inert buffer material was used to prevent arcing across the tear seal die in the press. The aluminum/brass tear seal die, manufactured by Mathias Die, St. Paul, MN, contained a center-beveled steel cutting edge (2.35 cm high) which was intimately attached to a 0.4763 cm x 2.29 cm brass bar formed into the shape of the mitt. Optimum cutting at the cuff opening was achieved by using a side-beveled steel cutting edge. The brass bar sealed the vinyl, as the steel edge cut the mitt from the web. The finished product was easily extracted from the surrounding waste sheet material.

EXAMPLE 2

A field trial was performed to evaluate several different types of materials for use in articles of this invention. The materials are listed and described in and below TABLE 1.

Washing of a horse's coat was done in the following manner. Approximately two ounces of Wonder Blue™ Shampoo and two gallons of water were charged to a five gallon bucket. Substantially flat 4 inch by 8 inch (0.2 cm by 20 cm) swatches of each material to be tested were grasped and hand held and dipped into the bucket; shampoo solution was topically applied to the dorsal aspect of the horse's left flank and rump. Observations were made and recorded and are provided below.

Each material was subjectively evaluated as to three parameters: (1) lathering, (2) deep cleaning, and (3) safety, and ultimately classified into three groups as being (A) "exceptional", (B) "acceptable", or (C) "unacceptable" in each parameter. Those results are tabulated in TABLE 2.

The porosity of the materials was evaluated in the following manner: A sample was blotted on a black ink pad to a non-dripping state and then applied to a sheet of white bond paper for about 2 seconds under a 2 kg weight, The ink remaining on the paper is allowed to dry, and the image reflectivity of a central portion of the paper is measured using a Photovolt Model 670 instrument having a 3/8 inch (0.95 cm) orifice and a green tristimulus filter attached to the sensor head. As can be seen, suitable materials for use in articles of the present invention exhibited a reflectivity value, as an indication of surface porosity, of between about 30 and about 100 using this method.

The materials found to be particularly useful in TABLE 2 were those that had no negative ("-") ratings in any category, i.e., that were at least a positive (" + ") or a neutral ("0") in every category. Preferred were those having two or more positive ratings.

In TABLE 1, "PUR" refers to polyurethane, "PVC" refers to polyvinylchloride, "NYLON" refers to nylon 6, "PET" refers to polyethylene terephthalate, "PP" refers to polypropylene, and "TPR" refers to thermoplastic rubber.

TABLE 1

| Sample No. | Material | Weight per unit | Type | Reflec- tivity | Loft |
|---|---|---|---|---|---|
| 1 | PUR | 0.32 g/cm$^3$ | Open cell | 38 | 1.27 cm |
| 2 | PVC | 0.98 kg/m$^2$ | Low density extruded web | 82 | 0.63 cm |
| 3 | PUR | 0.26 g/cm$^3$ | Open cell | 7 | 1.27 cm |
| 4 | NYLON | 0.46 kg/m$^2$ | Low density matting | 83 | 1.9 cm |
| 5 | PET | 100 Denier | Air laid | 67 | 1.9 cm |
| 6 | PVC | 2.7 kg/m$^2$ | Low density extruded web | 62 | 0.953 cm |
| 7 | PP | NA | Extruded | 64 | 0.089 cm |
| 8 | TPR | NA | Extruded | 73 | 0.318 cm |
| 9 | PVC | 1.6 kg/m$^2$ | Low density extruded web | 70 | 0.76 cm |

NA = not available

## TABLE 1 (continued)

1    "Reticulated Foam", Prod. No. S-30, Crest Foam Corp.,
     Moonachie, NJ

2    "Miramat™ 2400", 0.0089 cm average filament diameter,
     3M, St. Paul, MN

3    "Polyurethane    Foam",    Prod.    No.    40310773,
     11.8 pores/cm, General Foam Corp., Bridgeview, IL

4    "Enkamat™ 7020", 0.064 cm average filament diameter,
     American Enka, Enka, NC

5    "Scotchbrite™  Topline  brand  pre-burnishing  Floor
     Pad", 3M, St. Paul, MN

6    "Nomad™ brand Cushion Plus Matting", 0.048 cm average
     filament diameter, 3M, St. Paul, MN

7    "Plastic netting", Prod. No. XN1670, 0.475 x 0.318
     cm, Conwed, St. Paul, MN

8    "Sink Matting", Cat. No. 14-317-5, Fischer Scientific

9    Unbacked  "Nomad™  brand  Cushion  Plus  Matting",
     0.48 cm average filament diameter, 3M, St. Paul, MN

TABLE 2

| Sample No. | Lather | Cleaning | Safety |
|---|---|---|---|
| 1 | + | + | + |
| 2 | + | + | + |
| 3 | + | - | + |
| 4 | 0 | + | - |
| 5 | 0 | - | - |
| 6 | + | 0 | + |
| 7 | - | - | 0 |
| 8 | 0 | 0 | + |
| 9 | + | 0 | + |

## TABLE 2 (continued)

Legend:

+  =  Exceptional

0  =  Acceptable

−  =  Unacceptable

Lathering:

+  one − three passes and foam is evident

0  six − eight passes and foam is evident

−  greater than eight passes and foam may still not be evident

Deep Cleaning:

+  short hair coat is consistently lifted, shampoo driven to base

0  short hair coat may be lifted, deliberate scrubbing required

−  device glides over hair coat; no lifting action

Safety:

+  safe for cleaning all external parts

0  may cause irritation or inflammation in sensitive areas

−  will cause irritation or inflammation in any areas after moderate scrubbing

EXAMPLE 3

An article of the present invention was made in the shape of a curry comb, using materials as described below. The die for the curry comb was made from 0.635 cm x 0.635 cm aluminum stock. A variety of circular and oval prototypes were made. The Thermatron unit described in EXAMPLE 1 was used at 50% power and a pressure of 2.46 kg/cm$^2$, with a 5 sec heat cycle followed by a 10 sec cool cycle. The two types of materials as described above were used in the vinyl-backed prototypes: erosion control and revegetation matting and the Nomad™ Cushion Plus material.

In comparison to the mitt of the present invention the curry comb provides a distinct advantage in that the solid backing of the comb prevented dirt and hair from accumulating on the hand of the user. The curry comb was nevertheless still effective in providing the desired lathering, deep cleaning, and safety. The curry comb was gentle and conformable enough to do the face, ears, and lower legs. The design of the material allowed for dirt and loose hair lifted from the skin in these delicate curved areas. It was very easy to grip with the hand because of the flexibility of the material and the hand strap.

**Claims**

1.  An article useful for grooming animals, the article comprising (a) sheet material comprising a three-dimensional, porous network of water-resistant, organic polymeric material, and (b) means for retaining the sheet material on or by a human hand.

2.  An article according to claim 1 wherein the article is provided in the shape of a mitt wherein at least one surface of the sheet material can be substantially contacted with an animal's coat.

3.  An article according to claim 1 wherein the article is provided in the shape of a curry comb wherein at least one surface of the sheet material can be substantially contacted with the animal's coat.

4.  An article according to claim 1 wherein the polymeric material is selected from the group consisting of an extruded web of polymeric strands and a reticulated foam.

5.  A process of grooming an animal comprising the steps of (a) providing an article according to claim 1, (b) retaining the article on a human hand, and (c) brushing the coat of the animal with the retained article.

FIG. 1

FIG. 2

30

32

34

*Fig.3*

34

36

5 → 5

38

30

*Fig.4*

38

36

40

32

*Fig.5*

14

**European Patent Office**

# EUROPEAN SEARCH REPORT

Application Number

EP 92 30 3295

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 969 225 (SCHUBERT) <br> * column 3, line 31 - column 4, line 37; figures 1,2 * | 1,2,4,5 | A01K13/00 <br> A47L13/16 <br> A47K7/02 |
| A | DE-A-3 507 698 (BAUMANN) <br> * the whole document * | 2 | |
| A | FR-A-442 302 (PURVIS) <br> * figures 1-3 * | 3 | |
| A | US-A-3 711 889 (JENNINGS) | | |
| A | FR-A-2 614 758 (MOUGEL) | | |
| A | GB-A-123 832 (HUME) | | |
| A | GB-A-2 230 423 (DUNLOP) | | |
| A,D | US-A-3 837 988 (HENNEN) | | |
| A,D | US-A-3 691 004 (WERNER) | | TECHNICAL FIELDS SEARCHED (Int. Cl.5 ) <br><br> A01K <br> A47L <br> A47K |

The present search report has been drawn up for all claims

| Place of search | Date of completion of the search | Examiner |
|---|---|---|
| THE HAGUE | 13 AUGUST 1992 | VON ARX V. U. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 .................................................................

& : member of the same patent family, corresponding document

EPO FORM 1503 03.82 (P0401)